# EUROPEAN PATENT APPLICATION

(11) **EP 2 387 131 A2**
(43) Date of publication of application: **16.11.2011**
(21) Application number: 11165134.5
(22) Date of filing: 06.05.2011
(51) Int. Cl.: H02K 1/27

(54) **Brushless DC motor**

(30) Priority: 10.05.2010 JP 2010108133
(71) Applicant: Makita Corporation, Anjo Aichi 446-8502 (JP)
(72) Inventor: Ota, Kenichi, Anjo Aichi 446-8502 (JP); Ikuta, Ken, Anjo Aichi 446-8502 (JP)
(74) Representative: Kramer - Barske - Schmidtchen

(57) **Abstract**

A brushless DC motor (20) includes a rotor (30) having a shaft (31) and a column-shaped magnet (34) in which a through hole (34k) is formed at a center of the magnet (34) in the axial direction for allowing the shaft (31) to be inserted and also allowing resin (35) to be filled in a space between an inner wall surface of the through hole (34k) and an outer surface of the shaft (31), wherein the inner wall surface of the through hole (34k) of the magnet (34) and the outer surface of the shaft (31) are formed into shapes which can prevent relative rotation of the shaft (31) with respect to the magnet (34) via the resin (35).

## Description

This application claims priority to Japanese patent application serial number 2010-108133, the contents of which are incorporated herein by reference.

The present invention relates to a brushless DC motor provided with a rotor having a shaft and a column-shaped magnet.

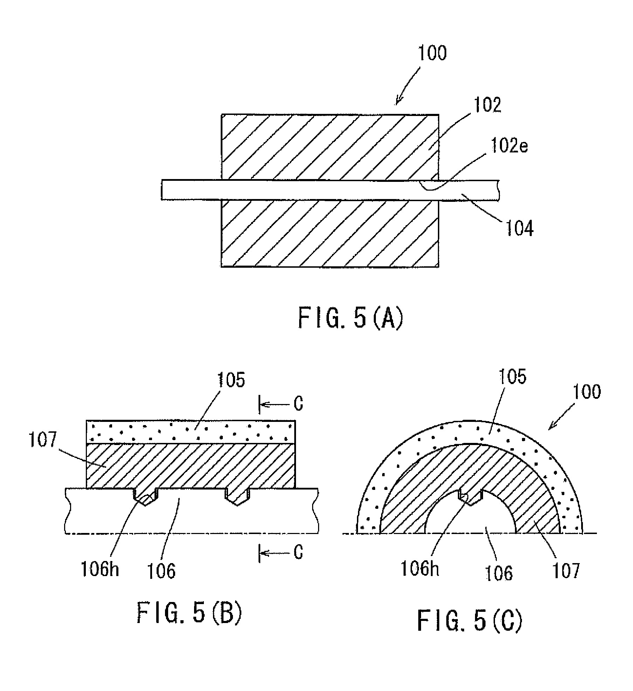

An example of a rotor of a brushless DC motor is shown in FIG. 5(A). A rotor 100 of the brushless DC motor includes a shaft 104 and a column-shaped magnet 102. The magnet 102 is provided with a through hole 102e in the direction of a center axis, and the shaft 104 is press-fitted into the through hole 102e, so that the both members 102 and 104 are coupled. However, when diameters of the through hole 102e of the magnet 102 and the shaft 104 are set to achieve a high coupling strength between the magnet 102 and the shaft 104, the magnet 102 may be broken at the time of press-fitting. In contrast, if the inner diameter of the through hole 102e is adjusted to prevent the magnet 102 from breaking, the coupling strength between the both members 104 and 102 is decreased, so that the shaft 104 may rotate with respect to the magnet 102 with time.

In order to solve the problem, a technique for filling resin 107 in a space between a cylindrical magnet 105 and a shaft 106 and for coupling the magnet 105 with the shaft 106 as shown in FIGS. 5(B) and 5(C) is described in Japanese Laid-Open Utility Model Publication No.2-88437 (Japanese Examined Utility Model Publication No.6-026040).

In the technique described in Japanese Laid-Open Utility Model Publication No.2-88437 (Japanese Examined Utility Model Publication No.6-026040), a recess 106h is formed on an outer surface of the shaft 106, and the recess 106h is filled with the resin 107 so that the relative rotation between the shaft 106 and the resin 107 can be prevented. However, since an inner surface of the cylindrical magnet 105 and an outer surface of the resin 107 are both formed into a circular shape in cross section, and are configured to come into surface contact with each other, there is a possibility of displacement of the magnet 105 in the direction of rotation with respect to the resin 107 with time.

Thus, there is a need to effectively prevent the relative rotation between a shaft and a magnet of a rotor.

According to one construction, there is provided a brushless DC motor including a rotor having a shaft and a column-shaped magnet in which a through hole is formed at a center of the magnet in the axial direction for allowing the shaft to be inserted and also allowing resin to be filled in a space between an inner wall surface of the through hole and an outer surface of the shaft, wherein the inner wall surface of the through hole of the magnet and the outer surface of the shaft are formed into shapes which can prevent relative rotation of the shaft with respect to the magnet via the resin.

In this construction, the inner wall surface of the through hole of the magnet and the outer surface of the shaft are formed into the shapes which achieve the prevention of relative rotation between the magnet and the shaft via the resin filled therebetween. Thus, displacement of the shaft in the direction of rotation with respect to the magnet with time can be prevented.

Because the inner wall surface of the through hole of the magnet and the outer surface of the shaft are formed into the shapes that can prevent relative rotation of the magnet and the shaft, the prevention can be achieved efficiently without a significant cost increase.

According to another construction, the through hole of the magnet is formed into a polygonal shape in cross section.

Thus, the outline of the resin filled in the through hole of the magnet also has a polygonal column shape, so that the rotation of the magnet with respect to the resin can be reliably prevented.

According to another construction, the magnet is magnetized so that a magnetic field is produced at a right angle to an outer surface of the magnet and a magnetic field is produced at a right angle to an end surface of the magnet in the axial direction.

A driving magnet can be used as a position-detecting magnet of the brushless DC motor, and thus, the number of components can be reduced. Also, such problem that the resin filled into the through hole of the magnet enters a space between the driving magnet and the position-detecting magnet which may occur when the driving magnet and the position-detecting magnet are separate members can be prevented.

According to another construction, the magnet is an isotropic bonded magnet.

Thus, it is easy to machine the magnet and to form the through hole into a desired shape.

According to the above, relative rotation between the shaft of the rotor and the magnet in the brushless DC motor can be prevented efficiently.

Additional objects, features, and advantages, of the present invention will be readily understood after reading the following detailed description together with the claims and the accompanying drawings, in which:
FIG. 1 is a vertical cross-sectional view of an electric power tool having a brushless DC motor according to an embodiment of the invention;
FIG. 2 is a vertical cross-sectional view (enlarged view of a part indicated by an arrow II in FIG. 1) of the brushless DC motor;
FIG. 3(A) is a vertical cross-sectional view of a rotor of the brushless DC motor;
FIG. 3(B) is a view of the rotor of the brushless DC motor in the direction indicated by arrows B-B in FIG. 3A;
FIG. 4(A) is a front view showing a state in which a driving magnet is magnetized;
FIG. 4(B) is a front view showing a state in which a position-detecting magnet is magnetized;
FIG. 4(C) is a side view of a rotor;
FIG. 5(A) is a vertical cross-sectional view of a rotor of a brushless DC motor in the related art;
FIG. 5(B) is a vertical cross-sectional view of a rotor described in Japanese Laid-Open Utility Model Publication No.2-88437 (Japanese Examined Utility Model Publication No.6-026040); and
FIG. 5(C) is a cross-sectional view taken along the line C-C in FIG. 5B.

Each of the additional features and teachings disclosed above and below may be utilized separately or in conjunction with other features and teachings to provide improved brushless DC motor. Representative examples of the present teaching, which examples utilize many of these additional features and teachings both separately and in conjunction with one another, will now be described in detail with reference to the attached drawings. This detailed description is merely intended to teach a person of skill in the art further details for practicing preferred aspects of the present teachings and is not intended to limit the scope of the invention. Only the claims define the scope of the claimed invention. Therefore, combinations of features and steps disclosed in the following detailed description may not be necessary to practice the invention in the broadest sense, and are instead taught merely to particularly describe representative examples of the invention. Moreover, various features of the representative examples and the dependent claims may be combined in ways that are not specifically enumerated in order to provide additional useful examples of the present teachings.

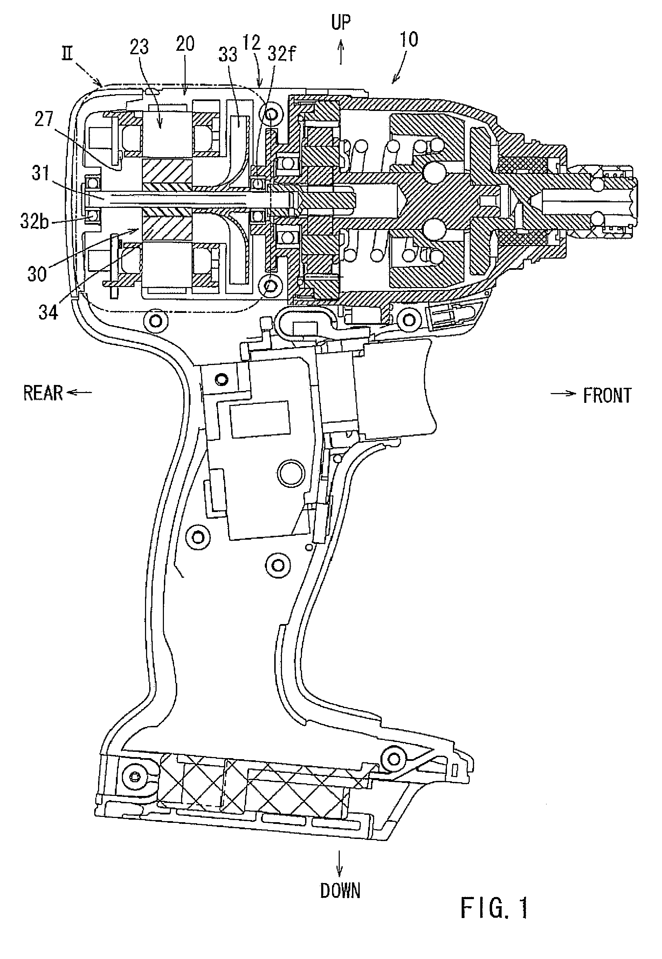

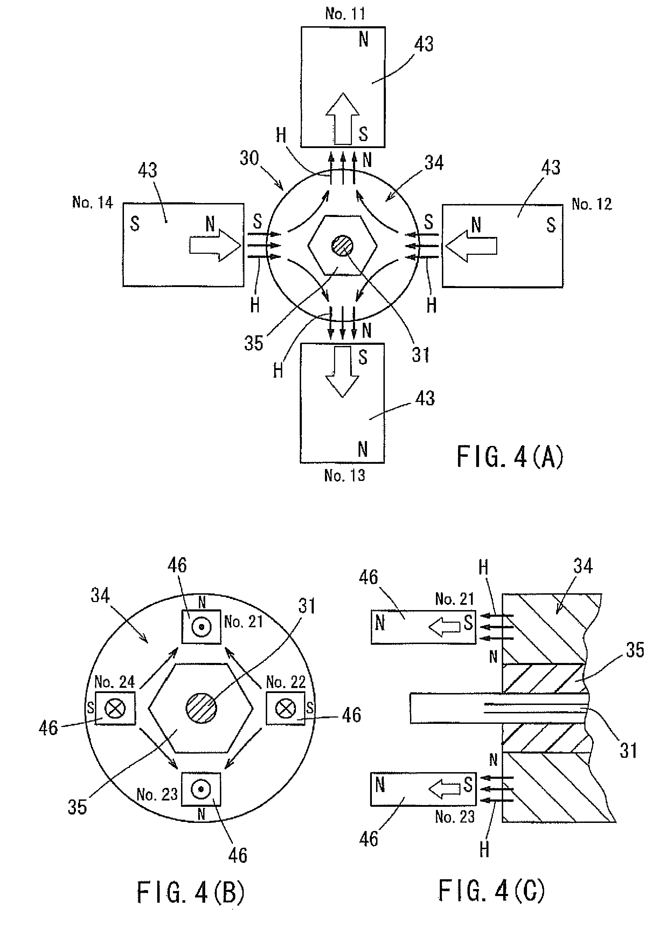

Referring now to FIGS. 1 to 4C, a brushless DC motor according to an embodiment of the invention will be described. A brushless DC motor 20 according to the embodiment is a motor used as a drive source of an impact driver 10, and is accommodated in a rear portion of a housing body 12 of the impact driver 10 as shown in FIG. 1.

The terms front, rear, left, right, up, and down described in the drawings correspond to the front, rear, left, right, up, and down of the impact driver 10.

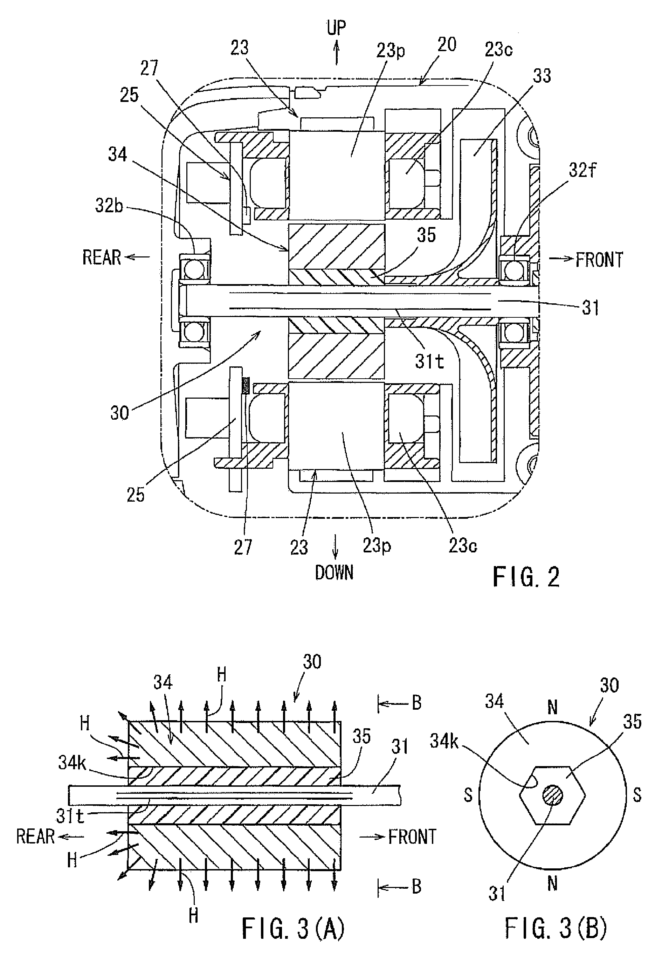

The brushless DC motor 20 includes a rotor 30 consisted of magnet etc., and a stator 23 having drive coils 23c as shown in FIG. 2.

The stator 23 includes a cylindrical body (not shown) and six tooth portions 23p projecting radially inward from an inner peripheral surface of the cylindrical body, and the tooth portions 23p are each wound with the drive coil 23c via an insulating member.

A ring-shaped electric circuit board 25 is attached to a rear end portion of the stator 23 coaxially with the stator 23, and three magnetic sensors 27 for detecting the positions of magnetic poles of the rotor 30 are arranged on a surface (front surface side) of the electric circuit board 25 at intervals of 120° in the circumferential direction.

As shown in FIGS. 1 and 2, the rotor 30 is supported by the housing body 12 with a shaft 31 of the rotor 30 supported via bearings 32f and 32b at both ends thereof so as to be coaxial with the stator 23. Further, a motor cooling fan 33 is coaxially mounted on a front portion of the shaft 31 projecting forward from the stator 23.

The brushless DC motor 20 is configured to rotate the rotor 30 by a motor drive circuit (not shown) which applies an electric current to the respective drive coils 23c of the stator 23 in sequence while the position of the magnetic poles of the rotor 30 are detected by the magnetic sensors 27.

The rotor 30 includes a substantially column-shaped magnet 34 as shown in FIGS. 3A and 3B. A through hole 34k having a hexagonal shape in cross section is formed at a center of the magnet 34 so as to extend in the axial direction as shown in FIG. 3B. Further, the shaft 31 is inserted coaxially into the through hole 34k of the magnet 34, and a space between the inner wall surface of the through hole 34k and an outer surface of the shaft 31 is filled with resin 35. In other words, the magnet 34 and the shaft 31 are set in a mold (not shown) in a state of being kept coaxially with each other and, in this state, the resin 35 is injected into the through hole 34k of the magnet 34. Accordingly, the magnet 34 and the shaft 31 are coupled via the resin 35.

For example, polyester is used as the resin.

As described above, the through hole 34k of the magnet 34 is formed into a hexagonal shape in cross section, and the outline of the resin 35 filled in the through hole 34k of the magnet 34 also has a hexagonal column shape, so that the relative rotation of the magnet 34 with respect to the resin 35 can be prevented. Because a ridge 31t extending in the axial direction is formed on a surface of the shaft 31 as shown in FIG. 3A, it is also assured that the relative rotation between the shaft 31 and the resin 35 can be prevented.

The magnet 34 of the rotor 30 is a permanent magnet used for both a driving magnet of the brushless DC motor 20 and a position-detecting magnet, and is formed of an isotropic bonded magnet. The driving magnet is a permanent magnet in which the direction of a magnetic field H is at a right angle with respect to an outer surface of the rotor 30, that is, the same as the direction of the radius of the rotor 30, and is used for driving the brushless DC motor 20. The position-detecting magnet is a permanent magnet in which the direction of the magnetic field H is at a right angle with respect to a rear end surface of the rotor 30, that is, the same direction as the axial direction of the rotor 30, and is used by the magnetic sensor 27 for detecting the position of the magnetic poles of the rotor 30.

Because the magnet 34 is formed of the isotropic bonded magnet, two direction of magnetization (radial direction and axial direction) can be easily performed.

The bonded magnet that constitutes the magnet 34 is molded by solidifying magnet powder with binder, and hence it has a high flexibility in shape. Thus, the cross-sectional shape of the through hole 34k can be made to a desired shape.

The magnet 34 has four poles, and is provided with N-poles and S-poles at intervals of 90° in the circumferential direction. Further, as the magnet 34 is an isotropic magnet, it can be magnetized in the desired direction by being applied with a magnetic field from the outside.

The method of magnetizing the driving magnet sections of the magnet 34 will be described with reference to FIG. 4(A).

In order to magnetize the driving magnet sections, four field coils 43 (No. 11, No. 12, No. 13, and No. 14) are arranged around the magnet 34 at intervals of 90° in the circumferential direction, and magnetic fields are applied at a right angle (radial direction) to the outer surface of the rotor 30. At this time, the electric currents flow through the respective field coils 43 such that the direction of the magnetic fields of the adjacent field coils 43 is reversed. In this way, magnetization of the driving magnet portions can be performed, as shown in FIG. 4(A).

Next, in order to magnetize the position-detecting magnet portions, four field coils 46 (No. 21, No. 22, No. 23, and No. 24) are arranged in the vicinity of a rear end surface of the magnet 34 at intervals of 90°, and magnetic fields are applied at a right angle (axial direction) to the rear end surface of the rotor 30, as shown in FIGS. 4(B) and 4(C). At this time, the electric currents flow through the respective field coils 46 such that the direction of the magnetic fields of the adjacent field coils 46 is reversed. In this way, magnetization of the position-detecting magnet portions can be achieved.

In FIG. 4C, the field coil 46 of No. 22 and the field coil 46 of No. 24 are omitted.

In this way, the magnet 34 used for both the driving magnet and the position-detecting magnet can be obtained.

According to the brushless DC motor 20 in the embodiment, an inner wall surface of the through hole 34k of the magnet 34 and the outer surface of the shaft 31 are formed into shapes which can prevent the relative rotation between the magnet 34 and the shaft 31 via the resin 35 filled therebetween. Thus, displacement of the shaft 31 with respect to the magnet 34 with time can be prevented.

The inner wall surface of the through hole 34k of the magnet 34 and the outer surface of the shaft 31 are formed into shapes which can prevent the relative rotation between the magnet 34 and the shaft 31. Thus, the relative rotation can be efficiently prevented without a significant cost increase.

Since the through hole 34k of the magnet 34 is formed into a hexagonal shape in cross section, and the outline of the resin 35 filled in the through hole 34k of the magnet 34 also has a hexagonal column shape, the rotation of the magnet 34 with respect to the resin 35 can be reliably prevented.

Since the magnet 34 is an isotropic magnet used for both the driving magnet and the position-detecting magnet, the number of components can be reduced. In addition, such problem that the resin 35 filed into the through hole 34k of the magnet 34 enters a space between the driving magnet and the position-detecting magnet which may occur when the driving magnet and the position-detecting magnet are separate members can be prevented.

Since the magnet 34 is the isotropic bonded magnet, it is easy to machine the magnet 34 to form the through hole 34k into a desired shape.

The invention is not limited to the embodiment described above, and may be modified without departing the scope of the invention. For example, the magnet 34 having the four poles has been exemplified in the embodiment, but the number of poles of the magnet 34 can be changed as needed.

The through hole 34k of the magnet 34 having a hexagonal cross section has been exemplified in the embodiment, but it is also possible to form the through hole 34k of the magnet 34 having a square shape in cross section or a pentagonal shape in cross section.

The shaft 31 formed with the ridge 31t extending in the axial direction on the outer surface thereof has been exemplified in the embodiment, but it is also possible to form the shaft 31 into a square, pentagonal, or hexagonal shape in cross section.

In the embodiment, the brushless DC motor 20 is used in the impact driver 10, but it can be used in electric power tools other than the impact driver 10.

It is explicitly stated that all features disclosed in the description and/or the claims are intended to be disclosed separately and independently from each other for the purpose of original disclosure as well as for the purpose of restricting the claimed invention independent of the composition of the features in the embodiments and/or the claims. It is explicitly stated that all value ranges or indications of groups of entities disclose every possible intermediate value or intermediate entity for the purpose of original disclosure as well as for the purpose of restricting the claimed invention, in particular as limits of value ranges.

## Claims

1. A brushless DC motor (20) including a rotor (30) having a shaft (31) and a column-shaped magnet (34), wherein:
a through hole (34k) is formed at a center of the magnet (34) in the axial direction such that the shaft (31) can be inserted into the through hole (34k) and resin (35) can be filled in a space between an inner wall surface of the through hole (34k) and an outer surface of the shaft (31); and
the inner wall surface of the through hole (34k) of the magnet (34) and the outer surface of the shaft (31) are formed into shapes which are adapted to prevent relative rotation of the shaft (31) with respect to the magnet (34) via the resin (35).

2. The brushless DC motor (20) according to claim 1, wherein the through hole (34k) of the magnet (34) is formed into a polygonal shape in cross section.

3. The brushless DC motor (20) according to claim 1 or 2, wherein the magnet (34) is adapted to be magnetized so that a magnetic field (H) is produced at a right angle to an outer surface of the magnet (34) and a magnetic field (H) is produced at a right angle to an end surface of the magnet (34) in the axial direction.

4. The brushless DC motor (20) according to claim 3, wherein the magnet (34) is an isotropic bonded magnet.

5. The brushless DC motor (20) according to any one of claims 1 to 4, wherein a ridge (31t) is formed on a surface of the shaft (31) in the axial direction such that the relative rotation of the shaft (31) with respect to the resin (35) can be prevented.

6. The brushless DC motor (20) according to any one of claims 1 to 5, wherein the shaft (31) is formed into a polygonal shape in cross section.

7. The brushless DC motor (20) according to any one of claims 1 to 6, wherein the resin (35) is polyester.

8. An electric power tool comprising the brushless DC motor (20) according to any one of claims 1 to 7.
